# EUROPEAN PATENT SPECIFICATION

(11) **EP 1 181 621 B1**
(45) Date of publication and mention of the grant of the patent: **17.08.2005**
(21) Application number: 01915240.4
(22) Date of filing: 14.02.2001
(51) Int. Cl.: G02F 1/133, G09G 3/36

(54) **LIQUID CRYSTAL DISPLAY DEVICE WITH MEANS FOR TEMPERATURE COMPENSATION OF OPERATING VOLTAGE**
FLÜSSIGKRISTALLANZEIGEVORRICHTUNG MIT MITTELN ZUR TEMPERATURKOMPENSATION DER BETRIEBSSPANNUNG
DISPOSITIF D'AFFICHAGE A CRISTAUX LIQUIDES NEMATIQUES EN HELICE POURVU DE MOYENS DE COMPENSATION THERMIQUE D'UNE TENSION DE FONCTIONNEMENT

(30) Priority: 14.03.2000 EP 00200923
(43) Date of publication of application: 27.02.2002
(73) Proprietor: Koninklijke Philips Electronics N.V., 5621 BA Eindhoven (NL)
(72) Inventor: RUIGT, Adolphe, J., G., NL-5656 AA Eindhoven (NL)
(74) Representative: Raap, Adriaan Yde
(86) International application number: PCT/EP2001/001596
(87) International publication number: WO 2001/069310

(56) References cited:
- EP-A- 0 642 113
- US-A- 4 278 325
- US-A- 4 298 866

## Description

The invention relates to a liquid crystal display device according to the introductory part of claim 1.

Liquid crystal display devices of this type are generally known and are used, for example, in display screens for alphanumerical display devices in, for example, computing apparatus and measuring apparatus but also in car radios and telephone apparatus.

A device of the above-mentioned kind is known from US 4.298.866, which solves problems in using the device at varying ambient temperature, because characteristic values such as threshold voltage and saturation voltage are temperature-dependent for the liquid crystal material. To be able to use the liquid crystal display devices in a wide temperature range, the drive voltages are adapted, dependent on the temperature.

In US 4.298.866 adaption of voltages is performed by means of a bridge circuit comprising two measuring elements having different initial capacitance values. Dependent on the temperature behaviour of the device this bridge circuit produces a control voltage to cause the mean value of the voltage range used for driving being increased or decreased via a negative feed-back loop. This goes at the cost of an extra measuring circuit and a bridge circuit. The features of the preamble of claim 1 are known from that document.

It is, inter alia, an object of the present invention to reduce extra circuitry as much as possible.

To this end, a liquid crystal display device according to the invention is characterized according to the characterizing part of claim 1.

Said means provide the possibility of automatically adjusting the operating voltage, so that said extra step is superfluous.

Moreover, the adjusted operating voltage is thereby optimal so that a minimal quantity of unnecessary power is used.

Preferably the measuring element comprises a pixel.

These and other aspects of the invention are apparent from and will be elucidated with reference to the embodiments described hereinafter.

In the drawings:
Fig. 1 is a diagrammatic cross-section of a part of the display device, together with a diagrammatic representation of the drive section,
Fig. 2 roughly shows the dependence of the current through a (measuring element) pixel (the capacitance of a (measuring element) pixel, respectively) as a function of the effective voltage (Vᵣₘₛ) across the pixel,
Fig. 3 shows the derivative of the function as shown in Fig. 2,
Fig. 4 shows a possible signal for activating a measuring element, while
Figs. 5 to 7 show possible derived signals for the purpose of detection, and
Fig. 8 shows diagrammatically a part of the voltage control.

The Figures are diagrammatic and not drawn to scale. Corresponding elements are generally denoted by the same reference numerals.

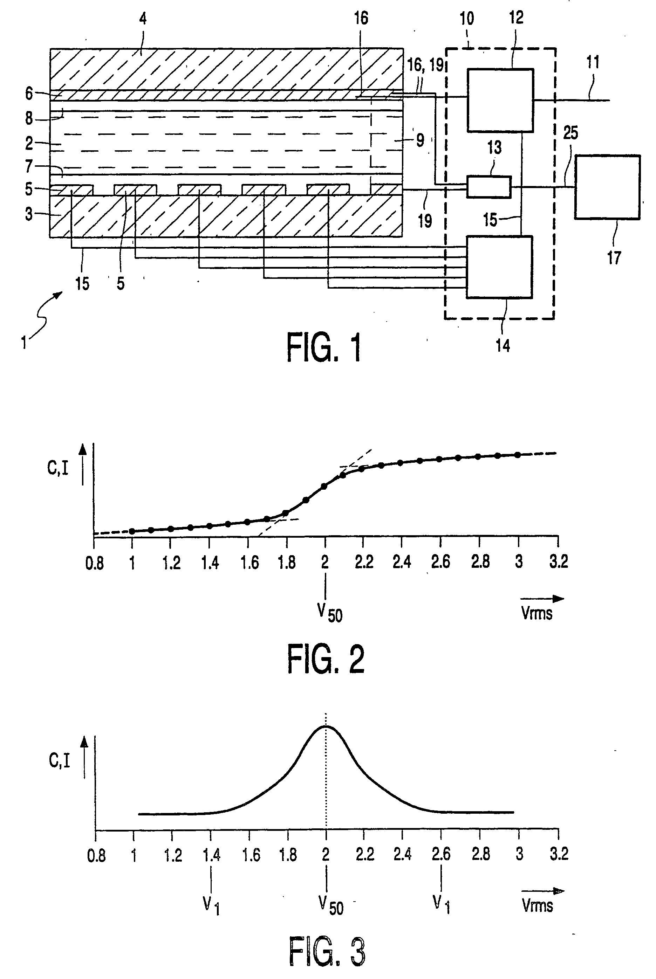

Fig. 1 is a diagrammatic cross-section of a part of a liquid crystal display device, comprising a liquid crystal cell 1 with a twisted neniatic liquid crystal material 2 present between two supporting plates or substrates 3 and 4 of, for example, glass or quartz, with selection electrodes 5 and data electrodes 6 in this embodiment. The liquid crystal material (for example, MLC3700 of the firm of Merck) has a positive optical anisotropy, a positive dielectric anisotropy and a low threshold voltage in this case. If necessary, the device comprises polarizers (not shown) whose directions of polarization are, for example, mutually crossed perpendicularly. The device further comprises orientation layers 7, 8 which orient the liquid crystal material on the inner walls of the substrates in such a way that the twist angle is, for example, 270°. The display device is of the passive type but may also be provided with active switching elements which connect picture electrodes to drive electrodes.

In the drive section 10, incoming information 11 is processed, if necessary, and stored in a data register 12, and presented to the data electrodes 6 via data signal lines 16. Pixels, here arranged in rows and columns, are selected by consecutively selecting row electrodes 5 which are connected to a multiplex circuit 14 via row signal lines 15. Mutual synchronization between the multiplex circuit 14 and the data register 12 is ensured by the line 15. After all row electrodes have been selected, this selection is repeated. The display device is also provided with a power supply source 17 shown diagrammatically, which supplies, inter alia, the operating voltage of the liquid crystal display device.

According to the invention, the display device also comprises a measuring element 9 which is shown diagrammatically and is connected via signal lines 19 to a control section 13 of the drive section 10 indicated by broken lines. A pixel, whose kind of measuring value to be described is periodically measured, may also be used as a measuring element. The variation of the current I through such a measuring element (pixel) as a function of the effective voltage (Vᵣₘₛ) across the measuring element (pixel) is shown in fig. 2. The solid-line curve shows the actually measured curve, whereas the broken line curve represents an idealized curve. The units on the Y axis are scaled. A similar curve applies to the capacitance C of the measuring element.

As regards shape, these curves can be compared with the transmission/voltage characteristic of the pixels. Notably, the voltage associated with the steepest part of the transition and hence the peak of the differentiated curve as shown in Fig. 3 corresponds to the voltage value V₅₀, which is the value where the transmission is 50% of the maximum transmission; this value is directly coupled to other characteristic values such as the threshold voltage or the saturation voltage in the transmission/voltage characteristic of the display device. This value is particularly coupled to the operating voltage Vₒₚ and drive voltages derived therefrom.

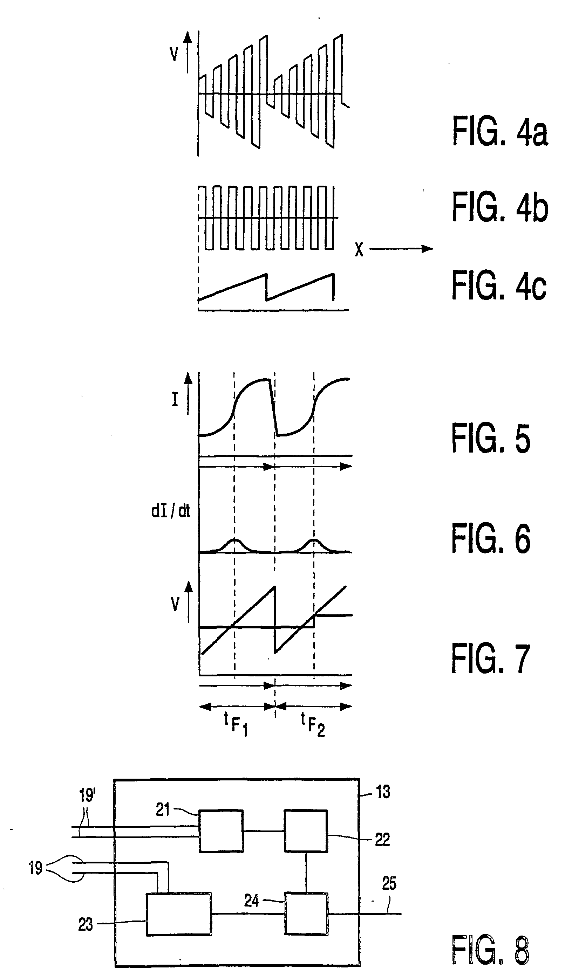

In the control section 13, a square-wave voltage (a, Fig. 4) rising in effective value is generated in a voltage generator at an appropriate instant, for example, by mixing a square-wave (b in Fig. 4) and a ramp voltage (c in Fig. 4), which voltage is applied to a measuring element 23 via signal lines 19' during one or more frame periods t_{F}. Fig. 5 shows the associated current through the measuring element which is measured in measuring unit 21 via signal lines 19. The differential circuit 22 determines the derived current, as is shown in Fig. 6. The value of the derived current is applied to computing unit 24. A sawtooth voltage related to said ramp voltage (c in fig. 4) is also applied from measuring element 23 to the computing unit 24. The computing unit 24 is adapted in such a way that the occurrence of the maximum value in the derived current, as shown in Fig. 6, is related to a coincident voltage of the sawtooth voltage and hence of the presented Vᵣₘₛ. In this way, an indication (analog or digital) for V₅₀ is obtained, which is fed back via the line 25 to the power supply unit 17 in which the operating voltage is adjusted on the basis of the indication obtained. In the (diagrammatic) example of Figs. 5 to 7, the value of V₅₀ is higher during the frame period t_{F2} than during the frame period t_{F1} and the operating voltage will be raised (in this example).

The invention is of course not limited to the embodiment shown, but several variations are possible within the scope of the claims. For example, intermittent measurements may take place, with V₅₀ not being determined during each frame period but, for example, once per n frame periods (n>100). Notably in the latter case, a pixel may be used for measuring so that it is not necessary to provide an extra measuring element. Several variations are also possible for realizing the control section 13.

The protective scope of the invention is not limited to the embodiments shown.

Any reference numerals in the claims do not limit their protective scope. The use of the verb "to comprise" and its conjugations does not exclude the presence of elements other than those stated in the claims. The use of the indefinite article "a" or "an" preceding an element does not exclude the presence of a plurality of such elements.

## Claims

1. A liquid crystal display device (1) comprising a first substrate (3) provided with electrodes (6) and a second substrate (3) provided with electrodes (5), and a twisted liquid crystal material (2) between the two substrates, in which, viewed perpendicularly to the substrates overlapping parts of the electrodes define pixels and a measuring element (9), the display device being provided with means (17) for adjusting an operating voltage of the liquid crystal display device in dependence upon the switching behavior of the measuring element, the means for adjusting the operating voltage of the liquid crystal display device comprising means for varying the voltage applied to the measuring element and for simultaneously measuring the current through the measuring element, said varying means being adapted to calculate the current-voltage characteristic of the measuring element, **characterized in that** the means (17) for adjusting the operating voltage of the liquid crystal display device is adapted to adjust the operating voltage as a function of a voltage value (V₅₀) derived from the current-voltage characteristic by determining the value of the voltage at which the transmission of the pixels is 50% of the maximum transmission.

2. A liquid crystal display device as claimed in Claim 1, **characterized in that** the measuring element comprises a pixel.

## Patentansprüche

1. Flüssigkristallanzeigeeinrichtung (1) mit einem ersten, mit Elektroden (6) versehenen Substrat (3) und einem zweiten, mit Elektroden (5) versehenen Substrat (3) und einem verdrillten Flüssigkristallmaterial (2) zwischen den zwei Substraten, in der, senkrecht zu den Substraten gesehen, überlappende Teile der Elektroden Pixel und ein Messelement (9) definieren, wobei die Anzeigeeinrichtung mit Mitteln (17) zum Einstellen einer Betriebsspannung der Flüssigkristallanzeigeeinrichtung in Abhängigkeit vom Schaltverhalten des Messelements versehen ist, wobei die Mittel zum Einstellen der Betriebsspannung der Flüssigkristallanzeigeeinrichtung Mittel zum Verändern der an das Messelement angelegten Spannung und zum gleichzeitigen Messen des durch das Messelement fließenden Stroms umfassen, wobei die genannten Veränderungsmittel zum Berechnen der Strom/Spannungskennlinie des Messelements ausgebildet sind, **dadurch gekennzeichnet, dass** die Mittel (17) zum Einstellen der Betriebsspannung der Flüssigkristallanzeigeeinrichtung dazu ausgebildet sind, die Betriebsspannung als Funktion eines Spannungswertes (V50) einzustellen, der aus der Strom/Spannungskennlinie durch Bestimmen des Wertes der Spannung, bei der die Transmission der Pixel 50% der maximalen Transmission beträgt, abgeleitet wird.

2. Flüssigkristallanzeigeeinrichtung nach Anspruch 1, **dadurch gekennzeichnet, dass** das Messelement ein Pixel umfasst.

## Revendications

1. Dispositif d'affichage à cristaux liquides (1) comprenant un premier substrat (3) qui est pourvu d'électrodes (6) et un second substrat (3) qui est pourvu d'électrodes (5), et un matériau à cristaux liquides torsadé (2) entre les deux substrats dans lequel, vu perpendiculairement aux substrats, des parties chevauchantes des électrodes définissent des pixels et un élément de mesure (9), le dispositif d'affichage étant pourvu de moyens (17) pour régler une tension de fonctionnement du dispositif d'affichage à cristaux liquides dépendamment du comportement-de commutation de l'élément de mesure, les moyens pour régler la tension de fonctionnement du dispositif d'affichage à cristaux liquides comprenant des moyens pour faire varier la tension qui est appliquée à l'élément de mesure et pour mesurer simultanément le courant traversant l'élément de mesure (3), lesdits moyens variables étant adaptés de manière à calculer la caractéristique de courant-tension de l'élément de mesure, **caractérisé en ce que** les moyens (17) pour régler la tension de fonctionnement du dispositif d'affichage à cristaux liquides sont adaptés de manière à régler la tension de fonctionnement en fonction d'une valeur de tension (V₅₀) qui est dérivée de la caractéristique de courant-tension par détermination de la valeur de la tension à laquelle la transmission des pixels est égale à 50% de la transmission maximale.

2. Dispositif d'affichage à cristaux liquides selon la revendication 1, **caractérisé en ce que** l'élément de mesure comprend un pixel.
